# EUROPÄISCHE PATENTSCHRIFT

(11) **EP 0 616 410 B1**
(45) Veröffentlichungstag und Bekanntmachung des Hinweises auf die Patenterteilung: **18.03.1998**
(21) Anmeldenummer: 94101499.5
(22) Anmeldetag: 02.02.1994
(51) Int. Cl.: H02J 7/10

(54) **Verfahren und Vorrichtung zum Regenerieren von Spannungsquellen in Form von Primärelementen**
Method and device for regenerating voltage sources in the form of primary cells
Procédé et dispositif de régénération de sources de tension sous la forme d'éléments primaires

(30) Priorität: 17.03.1993 DE 4308538
(43) Veröffentlichungstag der Anmeldung: 21.09.1994
(73) Patentinhaber: Rotermund, Ulli, D-24941 Flensburg (DE)
(72) Erfinder: Rönisch, Werner, D-15738 Zeuthen (DE)
(74) Vertreter: Niedmers, Ole, Dipl.-Phys.

(56) Entgegenhaltungen:
- EP-A- 0 047 183
- EP-A- 0 135 275
- ELEKTOR ELECTRONICS, Bd. 7, Nr. 11, November 1980, Canterbury, GB, SS 110-112; 'How to recycle dry cell batteries'

## Beschreibung

Die Erfindung betrifft ein Verfahren zum Regenerieren von Spannungsquellen in Form von Primärelementen mittels zugeführter elektrischer Energie, sowie eine Vorrichtung zur Ausführung eines derartigen Verfahrens.

Primärelemente bzw. Primärspannungsquellen sind aus dem täglichen Leben nicht mehr wegzudenken und werden in den verschiedensten Geräten, Einrichtungen oder Vorrichtungen gebraucht, um dort als elektrische Spannungsquelle zur Versorgung dieser Geräte, Einrichtungen oder Vorrichtungen zu dienen. Primärspannungsquellen dieser Art sind beispielsweise Mangan-, Alkali-, Zink-Kohle- oder andere Elemente, die sich alle dadurch auszeichnen, daß sie nach einer bestimmten Betriebszeit nur noch eine derart geringe Spannung an ihren Ausgangspolen zeigen, daß ein bestimmungsgemäßer Betrieb der angeschlossenen Verbraucher nicht möglich ist.

Einher mit der sinkenden Ausgangsspannung geht aufgrund elektro-chemischer Veränderungen im Inneren derartiger Primärelemente eine Veränderung des Innenwiderstandes der Elemente, so daß ebenfalls die Leistung der Elemente parallel zur Nennspannung abnimmt. Typischerweise hat ein Primärelement beispielsweise im unbelasteten, ursprünglichen Zustand eine Spannung von 1,5 V. Ein Element dieser Art wird als verbraucht angesehen, wenn die Spannung auf ca. 1 bis 1,2 V abgesunken ist.

In der Regel werden derart verbrauchte Elemente vielfach bedenkenlos über den normalen Hausmüll oder gewerblichen Müll entsorgt, was aufgrund der materialmäßigen und chemischen Zusammensetzung der Bestandteile derartiger Elemente unter Umweltschutzgesichtspunkten in hohem Maße bedenklich bzw. gefährlich ist. Zwar werden neuerdings derart verbrauchte Elemente in gesonderten Sammelstellen gesammelt und einer kontrollierten Verwertung ihre Bestandteile zugeführt, vielfach wird aber ein Element als verbraucht im vorangehend beschriebenen Sinne angesehen, wenn es eine untere Spannungsgrenze von 1 bis 1,2 V erreicht hat, die Bestandteile des Elements eigentlich aber noch vollständig intakt ist.

Dabei ist zu beachten, daß die sich im Laufe des Betriebes veränderende Spannung des Elements und die damit einhergehende Verminderung des Stromabgabevermögens an sich nur durch die bei dem Gebrauch der Elemente in deren Inneren ablaufenden Reaktionen im Laufe der Benutzungszeit bestimmt wird.

Es hat verschiedene Versuche bzw. Verfahren gegeben, Primärspannungsquellen, die verbraucht im vorangehend beschriebenen Sinne sind, wieder aufzuarbeiten mit dem Ziel, daß diese für eine weitere Zeit eine vorbestimmte Leistung abzugeben imstande sind. Alle bisher bekannten Verfahren haben jedoch den Nachteil, daß sie eine wirklich wirksame Regeneration nicht oder nur auf sehr unvollständige Weise ermöglichten.

EP-A-0 047 187 offenbart einen Batterie-Reaktivator für Primärspannungsquellen unter Verwendung von ungefilterten gleichgerichteten Wechselstrom.

EP-A-0 135 275 offenbart einen Batterie Reakivator für Primärspannungsquellen unter Verwendung von resonanten gedämpften Schwingungen.

Es ist somit Aufgabe der vorliegenden Erfindung ein Verfahren und eine Vorrichtung der Eingangs genannten Art zu schaffen, mit denen eine Regenerierung von Primärspannungsquellen in einer Weise möglich ist, daß nahezu das Leistungsvermögen von noch nicht benutzten, unverbrauchten Primärspannungsquellen erreicht wird, wobei das Verfahren und die Vorrichtung einfach und kostengünstig ausführbar bzw. herstellbar sein sollen, so daß diese auch zu geringen Gestehungskosten in großem Maße Einsatz finden können.

Die Aufgabe wird gemäß dem Verfahren dadurch gelöst, daß die zu regenerierende Spannungsquelle über ein vorbestimmtes Zeitintervall mit im wesentlichen periodisch angelegten Spannungsimpulsen vorbestimmbarer fester Amplitude und vorbestimmbarer fester Impulsmenge beaufschlagt wird, wobei die Spannungsimpulse eine kurze Anstiegzeit aufweisen.

Der Vorteil des erfindungsgemäßen Verfahren besteht im wesentlichen darin, daß die Primärspannungsquelle derart regenerierbar ist, daß, wie angestrebt, tatsächlich nahezu eine Leistungsabgabe erreichbar ist, wie sie bisher nur durch unbenutzte, unverbrauchte Primärspannungsquellen erreichbar war. Das erfindungsgemäße Verfahren hat darüber hinaus den Vorteil, daß es auch möglich ist, die Primärspannungsquelle nach mehrmaliger Entladung mehrmalig zu regenerieren, wobei nach jedem Regenerationsschritt wiederum annähernd das ursprüngliche Leistungsvermögen erreichbar ist. Durch das Verfahren wird darüber hinaus vorteilhafterweise erreicht, daß neben der Einsparung von Rohstoffen auch das Entsorgungsproblem entschärft wird und die Primärspannungsquelle erst dann nach mehrmaliger Regeneration entsorgt zu werden braucht, wenn tatsächlich eine innere, irreparable Zerstörung der Primärspannungsquelle beobachtet wird. Die Spannungsimpulse sind derart ausgebildet, daß sie eine kurze Anstiegszeit bzw. kurze Abstiegzeit aufweisen, d.h es handelt sich um steilflankige Spannungsimpulse, die zur Vergrößerung des Regenerierungseffekts wesentlich beitragen.

Die Impulslängen liegen vorteilhafterweise zwischen 10⁻³ s bis 2 x 10⁻³ s, wobei die Impulslänge in Abhängigkeit des zu regenerierenden Elements variabel auch in Abhängigkeit anderer Parameter einstellbar ist.

Auch ist vorteilhafterweise die Frequenz der Spannungsimpulse variabel und kann beispielsweise in einem vorzugsweisen Bereich von 2 bis 200 Hz liegend gewählt und angelegt werden.

Schließlich ist auch vorzugsweise der Regenerierungsstrom beispielsweise im Bereich von 5 x 10⁻² A bis 15 A liegend einstellbar. Dabei ist es möglich, beispielsweise in diesem Bereich den Regenerierungsstrom fest einzustellen, d.h. mit konstant gepulstem Strom und sich in Abhängigkeit vom Regenerationszustand der Primärspannungsquelle ändernden Spannungsimpulsamplituden zu regenerieren, es ist aber auch vorteilhafterweise möglich, den Regenerierungsstrom in Abhängigkeit des Innenwiderstandes der zu regenerierenden Spannungsquelle sich selbstständig einstellen zu lassen bei vorgegebenen Spannungsimpulsen mit konstanter, vorher festlegbarer Amplitude.

Eine Vorrichtung zum Regenerieren von Spannungsquellen in Form von Primärspannungsquellen mittels in Form einer Gleichspannung zugeführter elektrischer Energie ist durch eine niederohmige Gleichspannungsquelle gekennzeichnet, deren Gleichspannungssignal auf eine durch einen Taktgenerator getaktete Schalteinrichtung gegeben wird, und ein Zeitglied (22) um den Regenerierungsvorgang in einem vorbestimmten Zeitintervall vonstatten gehen zu lassen wobei der Ausgang der Schalteinrichtung, der eine Spannungsimpulsfolge mit fester Amplitude, kurzer Anstiegzeit und vorbestimmbaren fester Impulslänge liefert, mit dem einen Pol der Spannungsquelle zu deren Regenerierung verbindbar ist.

Der Vorteil der Vorrichtung besteht im wesentlichen darin, daß diese an sich auf einfache Weise aus im wesentlichen kostengünstig bereitstellbaren Komponenten aufgebaut werden kann, so daß die Vorrichtung grundsätzlich insgesamt geringe Gestehungskosten aufweist und sich somit auch zum massenweisen Einsatz in nahezu allen privaten und gewerblichen Bereichen einsetzen läßt. Regelmäßig wird eine derartige Vorrichtung aus dem normalerweise überall vorhandenen Spannungsnetz die zu ihrem bestimmungsgemäßen Betrieb erforderliche Primärenergie beziehen, so daß zu einer diesbezüglichen elektrischen Anpassung keine aufwendigen schaltungstechnischen Maßnahmen erforderlich sind, d.h. auf handelsübliche Spannungswandler und/oder Netzteile kann zurückgegriffen werden. Vorteilhafterweise umfaßt die Schalteinrichtung ein Stelleinrichtung zur Festlegung der Spannungsimpulsamplitude und vorteilhafterweise eine Regelungseinrichtung zur Regulierung des Regenerierungsstroms, soweit dieser konstant eingestellt werden soll bei sich verändernder Spannungsimpulsamplitude in Abhängigkeit vom Regenerierungsgrad der zu regenerierenden Primärspannungsquelle.

Die Regelungscharakteristik der Regelungseinrichtung kann vorzugsweise auf den sich in Abhängigkeit vom Regenerierungsgrad der Spannungsquelle änderenden Innenwiderstand angestellt sein, es ist aber auch möglich, eine andere Regelungscharateristik zu wählen, wenn dieses durch die Art der zu regenerierenden Spannungsquelle erforderlich bzw. gewünscht ist und besondere Regenerierungscharateristika gewünscht oder erforderlich sind.

Schließlich ist es vorteilhaft, das Regenerationszeitintervall der zu regenerierenden Spannungsquelle mittels eines dieses Zeitintervall einstellbaren Zeitgliedes einzustellen bzw. vorzubestimmen, so daß nach Abschluß des Regenerierungsprozesses quasi automatisch die Regenerierung beendet wird, d.h. die Primärespannungsquelle abgeschaltet wird.

Die Erfindung wird nun unter Bezugnahme auf die nachfolgenden beigefügten schematischen Zeichnungen anhand eines Ausführungsbeispieles eingehend beschrieben. Darin zeigen:
- Fig. 1: eine Vorrichtung zur Ausführung des Verfahrens zur Regenerierung von Spannungsquellen im Blockschaltbild,
- Fig. 2: ein im einzelnen gemäß der Fig. 1 ausgebildetes Ausführungsbeispiel einer Vorrichtung in schaltungstechnisch detailliert dargestellter Weise,
- Fig. 3: den Spannungsverlauf einer Primärenspannungsquelle in Abhängigkeit von der Zeit bei einer Belastung von 6 Ohm entsprechend 250 mA, wobei Kurve A eine ungebrauchte Spannungsquelle zeigt, die Kurze B den Spannungsverlauf nach einer 1 Regenerierung und die Kurve C den Spannungsverlauf nach einer 2 Regenerierung, und
- Fig. 4: in der Draufsicht ein Gehäuse der Vorrichtung zur Aufnahme einer Mehrzahl von zu regenerierenden Spannungsquellen.

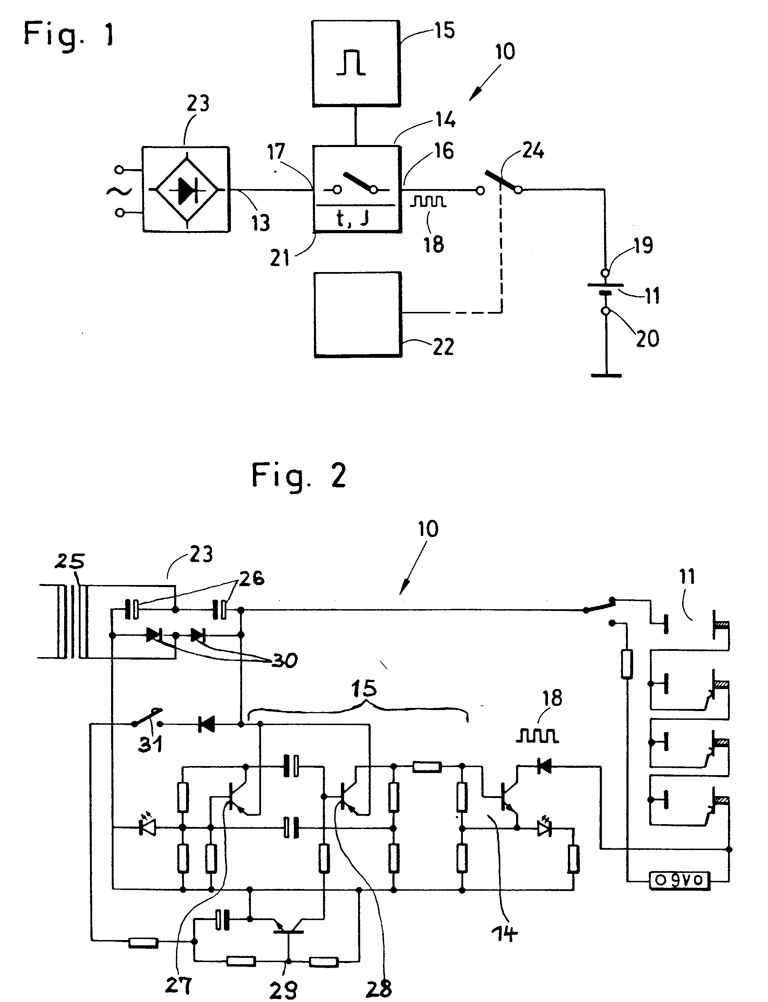

Die Vorrichtung 10 zur Ausführung des Verfahrens wird zunächst anhand des in Fig. 1 dargestellten Blockschaltbildes beschrieben. Eine niederohmige Gleichspannungsquelle 23 kann beispielsweise durch ein geeignet dimensioniertes Netzteil gebildet werden, das eingangsseitig an eine beliebige geeignete und auf geeignete Weise angepaßte Netzwechselstromspannungsquelle angeschlossen werden kann. Die Gleichspannungsquelle 23 liefert auf bekannte Weise eine Gleichspannung bzw. ein Gleichspannungssignal 13 auf den Eingang 17 einer Schalteinrichtung 14. Auf die Schalteinrichtung 14 wirkt unmittelbar ein Taktgenerator 15, der bewirkt, daß aus dem Gleichspannungssignal 13 ausgangsseitig 16 eine Spannungsimpulsfolge 18 geliefert wird, die über eine Stelleinrichtung 21, die ebenfalls mit der getakteten Schalteinrichtung 14 zusammenwirkt, in bezug auf die Impulslänge einstellbar ist. Die Impulslänge einer Halbperiode der Impulsfolge 18 ist beispielsweise zwischen 10⁻³ bis 2 x 10⁻³ s lang.

In der Stelleinrichtung 21 können auch Stell- bzw. Regelglieder angeordnet sein, mit denen der Regenerierungsstrom in Bereich von 5 x 10⁻²A bis 15 A einstellbar ist.

Der Taktgenerator 15 ist ebenfalls derart einstellbar bzw. regelbar, daß mit ihm die Frequenz der Spannungsimpulse der Spannungsimpulsfolge 18 einstellbar ist, beispielsweise in Bereich von 2 bis 200 Hz.

Ein Zeitglied 22 ist mit einem Schalter 24 derart verbunden, daß die am Ausgang 16 der getakteten Schalteinrichtung 14 liegenden Spannungsimpulse 18 an einen Pol 19 der zu regenerierenden Spannungsquelle 11 angelegt werden kann. Der andere Pol 20 der zu regenerierenden Spannungsquelle 11 ist auf an sich bekannte Weise mit dem anderem Pol der Gleichspannungsquelle 23, im vorliegenden Falle mit deren Masse, verbunden. Das Zeitglied 22 kann einstellbar ausgebildet sein, so daß auf vorbestimmte Weise der Regenerierungsvorgang, d.h. die Beaufschlagung der zu regenerierenden Spannungsquelle 11 mit der Spannungsimpulsfolge 18 in einem vorbestimmten Zeitintervall vonstatten gehen kann. Ist das Ende des Zeitintervalls erreicht, wird der elektrische Schalter 24, der zuvor durch Druck der Zeitintervalltaste geschlossen war, geöffnet, so daB automatisch eine Unterbrechung der Zufuhr der Spannungsimpulsfolge 18 zur zu regenerierenden Spannungsquelle 11 erfolgt.

Es sei darauf hingewiesen, daß die Vorrichtung 10 grundsätzlich auch derart ausgestaltet ist, daß die Möglichkeit besteht, daß der Regenerierungsstrom in Abhängigkeit des Innenwiederstandes der zu regenerierenden Spannungsquelle 11 konstant einstellbar ist (Konstantstromladung bzw. Regenerierung), aber auch bei Bedarf regelbar oder auch sich seibstständig auf den sich ändernden Innenwiederstand der zu regenerierenden Spannungsquelle 11 während des Regenerierungsvorganges einstellbar ist.

Fig. 2 zeigt die Vorrichtung gemäß Fig. 1 in einem schaltungstechnisch im einzelnen ausgeführten Ausführungsbeispiel.

Die Spannungsversorgung der Vorrichtung erfolgt über einen mit einem normalen Versorgungsspannungsnetz verbindbaren Transformator 25. Mit einem Pol der Sekundärseite des Transformators 25 sind zwei Kondensatoren 25 verbunden und mit dem anderen Pol zwei Dioden 30, die zusammen eine auf bekannte Weise arbeitende Gleichrichter-Spannungsverdopplerschaltung bilden. Dadurch wird auf bekannte Weise eine niederohmige Gleichspannungsquelle für die Versorgung folgender Funktionsstufen der Vorrichtung 10 gebildet:

Die Erzeugung und die Formierung der für einen hochwirksamen Regeneriereffekt erforderlichen steilflankigen Impulse erfolgt im Taktgenerator bzw. im Pulsgenerator 15. Dieser arbeitet als asymmetrischer Multivibrator mit den Transistoren 27 und 28 und erzeugt und formt die benötigten Impulse mit einer Impulsfolgefrequenz von 2-5 Hz. Über weitere Impulsformnetzwerke werden diese nachfolgend dem elektronischen Schalter 14 zugeführt und verstärkt. Nachfolgend werden diese Spannungsimpulse dann an den Teil der Vorrichtung geleitet, in den die zu regenerierenden Elemente eingesetzt werden können. Zum Schutze der Vorrichtung 10 und der darin zur Regenerierung angeordneten Elemente bzw. Spannungsquellen 11 kann die Schaltung der Vorrichtung 10 eine sog. Abschaltautomatik 29 aufweisen, die den Regenerier- bzw. Schnelladeprozess auf eine vorbestimmte Zeit, beispielsweise maximal 25 Minuten begrenzt. Bei Bedarf kann auf erneuten Druck auf eine Zeitschalttaste 31 der Regenerier-bzw. Schnelladeprozess erneut um die voreingestellte Zeit aktiviert werden.

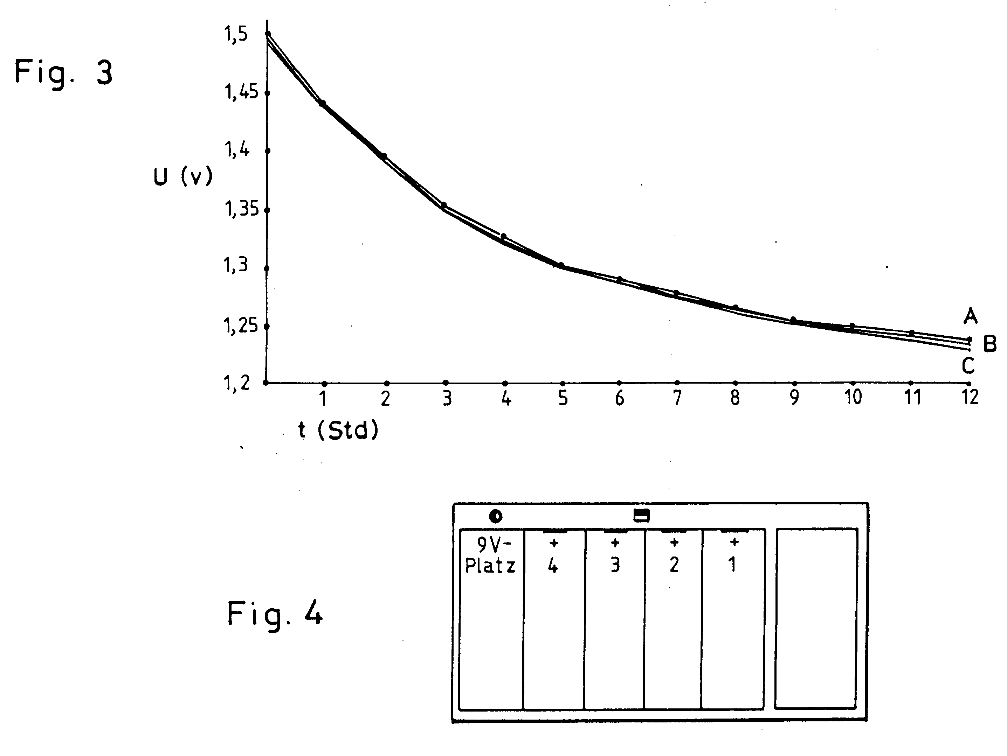

Fig. 3 zeigt den Verlauf der Ausgangsspannung einer Spannungsquelle in Abhängigkeit der Zeit nach einer Entladung über einen Belastungswiderstand von 6 Ohm entsprechend ca. 250 mA. Nach ca. 12 Stunden ist die Spannung der Spannungsquelle 11 von 1,5 V auf 1,2 V abgesunken. 250 mA entspricht in etwa dem Strombedarf einer Glühlampe, wie sie typischerweise für Taschenlampen Verwendung findet. Der erste Entladungsvorgang der Spannungsquelle 11 wird durch die Kurve A in Fig. 3 repräsentiert. Es handelt sich dabei um eine ungebrauchte, neue Spannungsquelle 11.

Nach einmaliger Regeneration über einen Zeitraum von ca. 20 min. liefert die somit mit dem erfindungsgemäßen Verfahren und der erfindungsgemäßen Vorrichtung regenerierte Spannungsquelle eine Nennspannung von wiederum ca. 1,5 V. Ein nachfolgendes Belasten der regenerierten Spannungsquelle 11 unter Beibehaltung der vorbeschriebenen Belastungsparameter nach 12 Stunden zeigt eine Kurve B, die nahezu der ursprünglichen Belastungskurve A entspricht. Ein nochmaliges Regenerieren mit dem erfindungsgemäßen Verfahren und der erfindungsgemäßen Vorrichtung 10 über eine Zeitraum von 20 min führt wiederum zu einer Nennabgabespannung von ca. 1,5 V, wobei unter Beibehaltung der vorgeschriebenen Belastungsparameter eine Kurve C erhalten wird, die nur geringfügig von den Kurven A und B abweicht.

Versuche haben ergeben, daß handelsübliche Primärspannungsquellen guter Qualität wenigstens 10 x auf vorbeschriebene Weise regeneriert werden konnten, ohne daß deren Leistungsvermögen signifikant abfiel.

Mit dem erfindungsgemäßen Verfahren wird erreicht, daß die Wirkungen der im Inneren einer Primärspannungsquelle 11 ablaufenden chemischen bzw. elektro-chemischen Reaktionen umgekehrt werden. Die normale elektro-chemische Reaktion bei angeschlossenem elektrischen Verbraucher ist die, daß sich auf den Elektroden Ablagerungen ergeben, die ein isolierende Wirkung haben. Mittels des erfindungsgemäßen Verfahrens und der erfindungsgemäßen Vorrichtung 10 werden die Elektroden von den isolierenden Ablagerungen befreit, so daß eine weitgehende Wiederherstellung Ihrer ursprünglichen Leistung bzw. Ihrer ursprünglichen Kapazität erreicht wird.

Fig. 4 zeigt beispielsweise ein Gehäuse der Vorrichtung 10 zur Aufnahme einer Mehrzahl zu regenerierender Spannungsquellen 11. Es können unterschiedliche bzw. zu ladende Spannungsquellen 11 darin aufgenommen werden und einzeln oder gleichzeitig regeneriert werden.

Es sei noch darauf hingewiesen, daß das erfindungsgemäße Verfahren und die erfindungsgemäße Vorrichtung 10 nicht nur zum Regenerieren von Primärspannungsquellen 11 geeignet sind, sondern auch zum besonders schnellen Laden von Sekundärspannungsquellen, d.h. den verschiedenen Arten von Akkumulatoren, ohne daß dabei das erfindungsgemäße Prinzip der Regenerierung bzw. Ladung mittels Spannungsimpulsen über eine bestimmte Zeit und vorbestimmter Impulsbreite, Amplitude und Frequenz und dergleichen verlassen wird. Auch zum Laden von Sekundärspannungsquellen haben sich das erfindungsgemäße Verfahren und die erfindungsgemäße Vorrichtung als sehr effektiv und geeignet herausgestellt.

### Bezugszeichenliste

- 10: Vorrichtung
- 11: Spannungsquelle (zu regenerierende)
- 12: Spannungsimpulse
- 13: Gleichspannungssignal
- 14: getaktete Schalteinrichtung
- 15: Taktgenerator
- 16: Ausgangsschalteinrichtung
- 17: Eingangsschalteinrichtung
- 18: Spannungsimpulsfolge
- 19: Pol (Spannungsquelle)
- 20: Pol (Spannungsquelle)
- 21: Stelleinrichtung
- 22: Zeitglied
- 23: Gleichspannungsquelle
- 24: Schalter
- 25: Transformator
- 26: Kondensator
- 27: Transistor
- 28: Transistor
- 29: Abschaltautomatik
- 30: Diode
- 31: Zeitschalttaste

## Patentansprüche

1. Verfahren zum Regenerieren von Spannungsquellen in Form von Primärelementen mittels zugeführter elektrischer Energie in Form von Spannungsimpulsen, dadurch gekennzeichnet, daß die zu regenerierende Spannungsquelle über ein vorbestimmtes Zeitintervall mit im wesentlichen periodisch angelegten Spannungsimpulsen vorbestimmbarer fester Amplitude und vorbestimmbarer fester Impulslänge beaufschlagt wird, wobei die Spannungsimpulse eine kurze Anstiegzeit aufweisen.

2. Verfahren nach Anspruch 1, dadurch gekennzeichnet, daß die Impulslänge zwischen 10⁻³ s bis 2 x 10⁻³ liegt.

3. Verfahren nach einem oder beiden der Ansprüche 1 oder 2, dadurch gekennzeichnet, daß die Spannungsimpulse mit einer Frequenz im Bereich von 2 bis 200 Hz angelegt werden.

4. Verfahren nach einem oder mehreren der Ansprüche 1 bis 3, dadurch gekennzeichnet, daß der Regenerierungsstrom im Bereich von 5 x 10⁻² A bis 15 A liegt.

5. Verfahren nach Anspruch 4, dadurch gekennzeichnet, daß der Regenerierungsstrom in Abhängigkeit des Innenwiderstandes der zu regenerierenden Spannungsquelle einstellbar und/oder regelbar ist.

6. Vorrichtung zum Regenerieren von Spannungsquellen in Form von Primärelementen mittels zugeführter elektrischer Energie zur Ausführung des Verfahrens nach einem oder mehreren der Ansprüche 1 bis 5, gekennzeichnet durch eine niederohmige Gleichspannungsquelle (23), deren Gleichspannungssignal (13) auf eine durch einen Taktgenerator (15) getaktete Schalteinrichtung (14) gegeben wird, und ein Zeitglied (22) um den Regenerierungsvorgang in einem vorbestimmten Zeitintervall vonstatten gehen zu lassen wobei der Ausgang (16) der Schalteinrichtung (14), der eine Spannungsimpulsfolge (18) mit fester Amplitude, kurzer Anstiegzeit und Vorbestimmbarer fester Impulslänge liefert, mit dem einem Pol (19) der Spannungsquelle (11) zu deren Regenerierung verbindbar ist.

7. Vorrichtung nach Anspruche 6, dadurch gekennzeichnet, daß die Schalteinrichtung (14) eine Regelungseinrichtung zur Regelung des Regenerierungsstroms aufweist.

8. Vorrichtung nach Anspruch 7, dadurch gekennzeichnet, daß die Regelungscharakteristik der Regelungseinrichtung auf den sich in Abhängigkeit vom Regenerierungsgrad der Spannungsquelle (11) ändernden Innenwiderstand abgestellt ist.

9. Vorrichtung nach einem oder mehreren der Ansprüche 6 bis 8, dadurch gekennzeichnet, daß das Regenerationszeitintervall der Spannungsquelle (11) mittels eines das Zeitintervall einstellbaren Zeitgliedes (22) einstellbar ist.

## Claims

1. Method for regenerating voltage sources in the form of primary cells by means of an electrical energy supply in the form of voltage pulses, characterized in that essentially periodic voltage pulses of predetermined fixed amplitude and predetermined fixed pulse length are applied during a predetermined interval of time to the voltage source which has to be regenerated, the voltage pulses having a short rise time.

2. Method according to Claim 1, characterized in that the pulse length is between 10⁻³ s and 2 x 10⁻³ s.

3. Method according to one or both of Claims 1 and 2, characterized in that the voltage pulse is applied with a frequency in the range between 2 and 200 Hz.

4. Method according to one or more of Claims 1 to 3, characterized in that the regeneration current is in the range between 5 x 10⁻² A and 15 A.

5. Method according to Claim 4, characterized in that the regeneration current can be adjusted and/or regulated as a function of the internal resistance of the voltage source to be regenerated.

6. Appliance for regenerating voltage sources in the form of primary cells by means of electrical energy supplied to carry out the method in accordance with one or more of Claims 1 to 5, characterized by a low-resistance DC voltage source (23) whose DC voltage signal (13) is fed to a cycled switching device (14) cycled by a cycle generator (15) and characterized by a timing element (22) so that the regeneration procedure can take place in a predetermined time interval, whereby the output (16) of the switching device (14), which output (16) supplies a voltage pulse sequence (18) of fixed amplitude, short rise time and predetermined fixed pulse length, can be connected to one pole (19) of the voltage source (11) for the regeneration of the latter.

7. Appliance according to Claim 6, characterized in that the switching device (14) has a regulating device for regulating the regeneration current.

8. Appliance according to Claim 7, characterized in that the regulation characteristic of the regulation device is adjusted in accordance with the internal resistance, which varies as a function of the degree of regeneration of the voltage source (11).

9. Appliance according to one or more of Claims 6 to 8, characterized in that the regeneration time interval of the voltage source (11) can be set by means of a time element (22) which can adjust the time interval.

## Revendications

1. Procédé pour régénérer des sources de tension sous la forme d'éléments primaires à l'aide d'une énergie électrique envoyée sous la forme d'impulsions de tension, caractérisé en ce que la source de tension à régénérer est chargée, pendant un intervalle de temps prédéterminé, par des impulsions de tension qui sont appliquées essentiellement périodiquement et ont une amplitude fixe pouvant être prédéterminée et une longueur fixe pouvant être prédéterminée, les impulsions de tension possédant une brève durée de montée.

2. Procédé selon la revendications 1, caractérisé en ce que la longueur des impulsions est comprise entre 10⁻³ s et 2 x 10⁻³ s.

3. Procédé selon une ou les deux revendications 1 ou 2, caractérisé en ce que les impulsions de tension sont appliquées à une fréquence dans la gamme de 2 à 200 Hz.

4. Procédé selon une ou plusieurs des revendications 1 et 3, caractérisé le courant de régénération se situe dans la gamme de 5 x 10⁻²A à 15 A.

5. Procédé selon la revendication 4, caractérisé en ce que le courant de régénération peut être ajusté et/ou réglé en fonction de la résistance interne de la source de tension à régénérer.

6. Dispositif pour régénérer des sources de tension sous la forme d'éléments primaires au moyen d'une énergie électrique envoyée pour la mise en oeuvre du procédé selon une ou plusieurs des revendications 1 à 5, caractérisé par une source de tension continue (23) de faible valeur ohmique, dont le signal de tension continu (13) est appliqué à un dispositif de commutation (14) commandé de façon cadencée par un générateur de cadence (15), et une minuterie (22) pour amener le processus de régénération à se dérouler pendant un intervalle de temps prédéterminé, la sortie (16) du dispositif de commutation (14), qui délivre une suite d'impulsions de tension (18) ayant une amplitude fixe, un bref temps de montée et une longueur fixe pouvant être prédéterminée, pouvant être reliée à un pôle (19) de la source de tension (11) pour sa régénération.

7. Dispositif selon la revendications 6, caractérisé en ce que le dispositif de commutation (14) comporte un dispositif de régulation servant à régler le courant de régénération.

8. Dispositif selon la revendication 7, caractérisé en ce que la caractéristique de régulation du dispositif de régulation est réglée sur la résistance interne, qui varie en fonction du degré de régénération de la source de tension (11).

9. Dispositif selon une ou plusieurs des revendications 6 à 8, caractérisé en ce que l'intervalle de temps de régénération de la source de tension (11) est réglable à l'aide d'une minuterie (22) qui permet de régler l'intervalle de temps.
